# EUROPEAN PATENT SPECIFICATION

(11) **EP 3 934 323 B1**
(45) Date of publication and mention of the grant of the patent: **23.07.2025**
(21) Application number: 20784563.7
(22) Date of filing: 03.04.2020
(51) Int. Cl.: H04W 36/08, H04W 36/32, H04W 36/00

(54) **NETWORK ACCESS MANAGEMENT METHOD AND APPARATUS FOR TERMINAL DEVICE**
NETZZUGANGSVERWALTUNGSVERFAHREN UND -VORRICHTUNG FÜR ENDGERÄT
PROCÉDÉ ET APPAREIL DE GESTION D'ACCÈS AU RÉSEAU POUR DISPOSITIF TERMINAL

(30) Priority: 03.04.2019 CN 201910266290
(43) Date of publication of application: 05.01.2022
(73) Proprietor: Huawei Technologies Co., Ltd., Shenzhen, Guangdong 518129 (CN)
(72) Inventor: MA, Jingwang, Shenzhen, Guangdong 518129 (CN); HUANG, Qufang, Shenzhen, Guangdong 518129 (CN); ZHOU, Guohua, Shenzhen, Guangdong 518129 (CN)
(74) Representative: Pfenning, Meinig & Partner mbB
(86) International application number: PCT/CN2020/083349
(87) International publication number: WO 2020/200319

(56) References cited:
- CA-A1- 3 048 764
- CN-A- 102 137 383
- CN-A- 102 547 833
- CN-A- 106 604 330
- US-A1- 2015 215 923
- US-A1- 2017 142 766
- OPPO: "Discussion on Handover Enhancements for V2X", vol. RAN WG2, no. Dubrovnik, Croatia; 20160411 - 20160415, 1 April 2016 (2016-04-01), XP051082003, Retrieved from the Internet <URL:http://www.3gpp.org/ftp/tsg_ran/WG2_RL2/TSGR2_93bis/Docs/> [retrieved on 20160401]

## Description

### TECHNICAL FIELD

This application relates to a network access management method for a terminal device and a network access management apparatus for a terminal device.

### BACKGROUND

Document US 2017/142766 A1 describes a method and a procedure for reducing latency in a mobility control and an access procedure of terminal equipment moving along a path.
Document CA 3 048 764 A1 describes a concept for handovers in cellular networks.
Document OPPO: "Discussion on Handover Enhancements for V2X", 3GPP DRAFT; R2-162199-DISCUSSION ON HANDOVER ENHANCEMENTS FOR V2X, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRAN, vol. RAN WG2, no. Dubrovnik, Croatia; 20160411 - 20160415 1 April 2016 (2016-04-01), XP051082003, URL:http://www.3gpp.org/ftp/tsg_ran/WG2_RL2/TSGR2_93bis/Docs/ describes a concept for handover enhancements for V2X.
A current network access management method for a terminal device is as follows: A terminal device receives and measures a network signal, and the terminal device performs network selection and access. When the terminal device moves, the terminal device cooperates with an access network to complete access processing during movement of the terminal device. Therefore, the method is defined on the premise that behavior of the terminal device is unknown. The terminal device and the access network need to perform related operations such as signal measurement and parsing and network selection that are complex to the terminal device and the access network. In addition, because the terminal device accesses the access network through contention-based random access, access reliability cannot be ensured. For example, when congestion occurs during network access, access of the terminal device may be rejected by an access network site.

In a vertical industry, a terminal device generally runs in a definite area, and a movement path and a speed of the terminal device are controlled by a control center. Therefore, movement path behavior of the terminal device is definite. Based on a service characteristic of the vertical industry, the network access management method needs to be simplified and optimized, to improve network access reliability and reduce access management complexity for a terminal device and a network.

### SUMMARY

This application provides a network access management method and apparatus for a terminal device according to the independent claims, to simplify and optimize a network access management method for a terminal device in a vertical industry. Therefore, network access reliability can be improved and access management complexity for a terminal device and a network can be reduced.

According to a first aspect, this application provides a terminal device management method. The method includes: determining, by a first access network device, a second access network device based on a current location of the terminal device and network access planning information, wherein the network access planning information comprises identifiers of cells on a movement path of the terminal device, the cells on the movement path of the terminal device comprise a first cell of the second access network device, the terminal device is connected to the first access network device, and the terminal device is about to enter the first cell; sending, by the first access network device, a handover request message to the second access network device, wherein the handover request message comprises a context of the terminal device and the network access planning information; receiving, by the first access network device, handover configuration information from the second access network device, wherein the handover configuration information is used, by the terminal device, to search for and select a cell of the second access network device, and the handover configuration information comprises an identifier of the cell that belongs to the second access network device and that is in the network access planning information; and sending, by the first access network device, the handover configuration information to the terminal device.

In a possible implementation method, the network access planning information further includes one or more of the following information: a priority of the terminal device that is allowed to access, a condition for allowing access to the cell on the movement path of the terminal device, a frequency of the cell on the movement path of the terminal device, an SMTC of the cell on the movement path of the terminal device, and an SFN of the cell on the movement path of the terminal device.

In a possible implementation method, the handover configuration information further includes one or more of the following information: a frequency of the cell that belongs to the second access network device and that is in the network access planning information, a handover threshold of the cell that belongs to the second access network device and that is in the network access planning information, the priority of the terminal device that is allowed to access, and a random access preamble (preamble) sequence.

In a possible implementation method, that the first access network device receives handover configuration information from the second access network device includes: The first access network device receives, from the second access network device, a handover response message in response to the handover request message, where the handover response message includes the handover configuration information.

In a possible implementation method, that the first access network device sends the handover configuration information to the terminal device includes: The first access network device sends a radio resource control RRC configuration request message to the terminal device, where the RRC configuration request message includes the handover configuration information.

In a possible implementation method, the first access network device receives the network access planning information from a core network.

In a possible implementation method, the network access planning information is determined based on network deployment information and information about the movement path of the terminal device, and the network deployment information includes cell coverage information of network deployment.

According to a second aspect, this application provides a communication apparatus. The apparatus may be a chip used for the terminal device. The apparatus has a function of implementing the embodiments of the first aspect. The function may be implemented by hardware, or may be implemented by hardware executing corresponding software. The hardware or the software includes one or more modules corresponding to the foregoing function.

### BRIEF DESCRIPTION OF DRAWINGS

FIG. 1 is a schematic diagram of a possible network architecture according to this application;
FIG. 2 is a schematic flowchart of a network access management method for a terminal device according to this application;
FIG. 3 is another schematic flowchart of a network access management method for a terminal device according to this application;
FIG. 4 is another schematic flowchart of a network access management method for a terminal device according to this application;
FIG. 5 is a schematic diagram of a communication apparatus according to this application;
FIG. 6 is another schematic diagram of a communication apparatus according to this application;
FIG. 7 is another schematic diagram of a communication apparatus according to this application; and
FIG. 8 is another schematic diagram of a communication apparatus according to this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

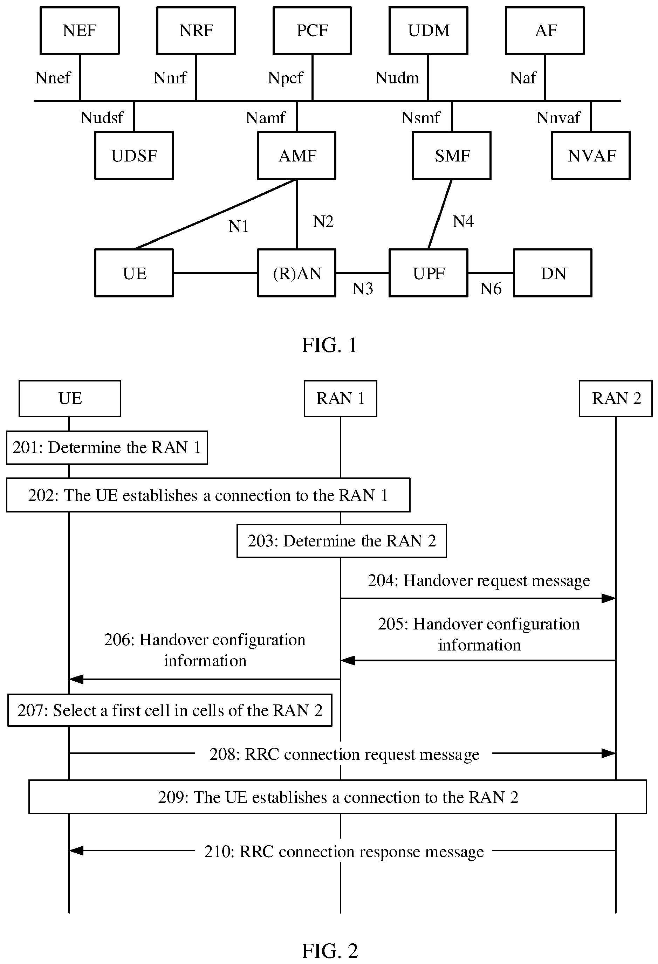

FIG. 1 is a schematic diagram of a 5th generation (the 5th generation, 5G) network architecture that is based on a service-oriented architecture. The 5G network architecture shown in FIG. 1 may include three parts: a terminal device, a data network (data network, DN), and a carrier network.

The carrier network may include a network exposure function (network exposure function, NEF) network element, a network repository function (network function repository function, NRF) network element, a policy control function (policy control function, PCF) network element, a unified data management (unified data management, UDM) network element, an application function (application function, AF) network element, a network vision and awareness function (Network Vision and Awareness Function, NVAF) network element, an unstructured data storage function (Unstructured Data Storage Function, UDSF) network element, an access and mobility management function (access and mobility management function, AMF) network element, a session management function (session management function, SMF) network element, a (radio) access network ((radio) access network, (R)AN), a user plane function (user plane function, UPF) network element, and the like. In the foregoing carrier network, the parts other than the (radio) access network may be referred to as core network parts. For ease of description, an example in which the (R)AN is referred to as a RAN is used below for description.

The terminal device (which may also be referred to as user equipment (user equipment, UE)) in this application is a device having a wireless transceiver function. The terminal device may be deployed on the land, including an indoor device, an outdoor device, a handheld device, or a vehicle-mounted device, may be deployed on a water surface (for example, on a ship), or may be deployed in the air (for example, on an airplane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

The terminal device may establish a connection to the carrier network through an interface (for example, N1) provided by the carrier network, and use a service such as data and/or voice provided by the carrier network. The terminal device may further access the DN through the carrier network, and use a carrier service deployed on the DN and/or a service provided by a third party. The third party may be a service provider other than the carrier network and the terminal device, and may provide a service such as data and/or voice to the terminal device. A specific representation form of the third party may be specifically determined based on an actual application scenario, and is not limited herein.

The access network device is a device that provides a wireless communication function to a terminal. For example, the access network device includes but is not limited to: a next-generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission point (transmitting and receiving point, TRP), a transmitting point (transmitting point, TP), or a mobile switching center.

In this application, a mobility management network element is a control plane network element provided by the carrier network, and is responsible for access control and mobility management when the terminal device accesses the carrier network, for example, including functions such as mobility status management, temporary user identity assignment, and user authentication and authorization. In 5G, the mobility management network element may be the AMF network element. In future communication, for example, in 6th generation (the 6th generation, 6G), the mobility management network element may still be the AMF network element, or may have another name. This is not limited in this application.

In this application, a session management network element is a control plane network element provided by the carrier network, and is responsible for managing a protocol data unit (protocol data unit, PDU) session of the terminal device. The PDU session is a channel used to transmit a PDU, and the terminal device needs to transmit a PDU to the DN through the PDU session. The SMF network element is responsible for establishment, maintenance, deletion, and the like of the PDU session. The SMF network element includes session-related functions such as session management (for example, session establishment, modification, and release, including tunnel maintenance between the UPF and the RAN), selection and control of the UPF network element, service and session continuity (Service and Session Continuity, SSC) mode selection, and roaming. In 5G, the session management network element may be the SMF network element. In future communication, for example, in 6G, the session management network element may still be the SMF network element, or may have another name. This is not limited in this application.

In this application, a network vision and awareness network element may store environment information corresponding to a vertical industry (for example, map data of the vertical industry and layout information of a factory area that can be obtained from a vertical industry control center), and communication network deployment information (for example, an access network site and coverage of a network cell) of an area corresponding to the vertical industry, and may further obtain information such as a movement path of the terminal device from the vertical industry control center. In 5G, the network vision and awareness network element may be the NVAF network element. In future communication, for example, in 6G, the network vision and awareness network element may still be the NVAF network element, or may have another name. This is not limited in this application.

In this application, a user plane network element is a gateway provided by a carrier, and is a gateway for communication between the carrier network and the DN. The UPF network element includes user plane-related functions such as packet routing and transmission, packet detection, service usage reporting, quality of service (Quality of Service, QoS) processing, lawful interception, uplink packet detection, and downlink packet storage. In 5G, the user plane network element may be the UPF network element. In future communication, for example, in 6G, the user plane network element may still be the UPF network element or have another name. This is not limited in this application.

The DN may also be referred to as a packet data network (packet data network, PDN), and is a network located outside the carrier network. The carrier network may access a plurality of DNs, and a plurality of services may be deployed on the DNs, to provide a service such as data and/or voice to the terminal device. For example, the DN is a private network of a smart factory, a sensor installed in a workshop of the smart factory may be a terminal device, a control server of the sensor is deployed in the DN, and the control server may provide a service to the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like on the internal office network of the company.

In this application, a data management network element is a control plane network element provided by the carrier, and is responsible for storing information such as a subscriber permanent identifier (subscriber permanent identifier, SUPI), a credential (credential), a security context (security context), and subscription data of a subscriber in the carrier network. The information stored in the UDM network element may be used for authentication and authorization when the terminal device accesses the carrier network. The subscriber in the carrier network may be specifically a subscriber using a service provided by the carrier network, for example, a subscriber using a SIM card of China Telecom, or a subscriber using a SIM card of China Mobile. The subscription permanent identifier (Subscription Permanent Identifier, SUPI) of the subscriber may be a number of the SIM card or the like. The credential and the security context of the subscriber may be stored small files such as an encryption key of the SIM card or information related to encryption of the SIM card, and are used for authentication and/or authorization. The security context may be cookie (cookie), a token (token), or the like stored in a local terminal (for example, a mobile phone) of the subscriber. The subscription data of the subscriber may be a supporting service of the SIM card, for example, a data package or available data of the SIM card. It should be noted that the permanent identifier, the credential, the security context, the cookie (cookie), and the token are equivalent to information related to authentication and authorization, and are not limited or distinguished between each other for ease of description in this application document of the present invention. Unless otherwise specified, the security context is used as an example for description in this embodiment of this application. However, this embodiment of this application is also applicable to authentication and/or authorization information described in another manner. In 5G, the data management network element may be the UDM network element. In future communication, for example, in 6G, the data management network element may still be the UDM network element, or may have another name. This is not limited in this application.

In this application, a network exposure network element is a control plane network element provided by the carrier. The NEF network element securely exposes an external interface of the carrier network to a third party. When the SMF network element needs to communicate with a third-party network element, the NEF network element may serve as a relay for communication between the SMF network element and the third-party network element. When the NEF network element serves as the relay, the NEF network element may translate identification information of the subscriber and identification information of the third-party network element. For example, when the NEF sends the SUPI of the subscriber from the carrier network to the third party, the NEF may translate the SUPI into an external identity (identity, ID) of the subscriber. When the NEF network element sends an external ID (an ID of the third-party network element) to the carrier network, the NEF network element may translate the external ID into the SUPI. In 5G, the network exposure network element may be the NEF network element. In future communication, for example, in 6G, the network exposure network element may still be the NEF network element, or may have another name. This is not limited in this application.

In this application, a policy control network element is a control plane function provided by the carrier, and is configured to provide a PDU session policy to the SMF network element. The policy may include a charging-related policy, a QoS-related policy, an authorization-related policy, and the like. In 5G, the policy control network element may be the PCF network element. In future communication, for example, in 6G, the policy control network element may still be the PCF network element, or may have another name. This is not limited in this application.

In FIG. 1, Nnef, Nudsf, Nnrf, Npcf, Nudm, Naf, Namf, Nnvaf, Nsmf, N1, N2, N3, N4, and N6 are interface sequence numbers. For meanings of these interface sequence numbers, refer to meanings defined in the 3GPP standard protocol. This is not limited herein.

The network vision and awareness network element in this application may be the NVAF network element shown in FIG. 1, or may be a network element that has a function of the NVAF network element in a future communication system. The access network device in this application may be the RAN device in FIG. 1, or may be a network element that has a function of the RAN device in a future communication system.

For ease of description, in this application, the AMF network element is referred to as an AMF for short, the NVAF network element is referred to as an NVAF for short, the RAN device is referred to as a RAN for short, and the terminal device is referred to as UE.

It may be understood that the foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, or may be jointly implemented by a plurality of devices, or may be one function module in one device. This is not specifically limited in the embodiments of this application.

To resolve the problem mentioned in the background, the architecture shown in FIG. 1 is used. As shown in FIG. 2, this application provides a network access management method for UE. The method may be used during initial access of UE and handover of the UE between access network devices in a process in which the UE moves based on information about a movement path in network access planning information.

For ease of description, an access network device accessed by the UE before the handover is referred to as a RAN 1, and an access network device accessed by the UE after the handover is referred to as a RAN 2.

The method includes the following steps.

Step 201: The UE determines the RAN 1 based on the network access planning information and a current location of the UE.

The network access planning information includes an identifier of a cell on a movement path of the UE, the cell on the movement path of the UE includes a cell of the RAN 1, and a cell covering the current location of the UE belongs to the RAN 1.

For example, the current location of the UE is a location A, and the UE determines, based on the network access planning information, that a cell corresponding to the location A belongs to the RAN 1. In this case, the UE determines that the RAN 1 is a RAN that needs to be initially accessed.

In an implementation method, the network access planning information further includes one or more of the following information: a priority of the UE that is allowed to access, a condition for allowing access to the cell on the movement path of the UE, a frequency of the cell on the movement path of the UE, a radio resource management-based synchronization signal block measurement timing configuration (SS block based RRM measurement timing configuration, SMTC) of the cell on the movement path of the UE, and a system frame number (System Frame Number, SFN) of the cell on the movement path of the UE.

The priority of the UE that is allowed to access is used by the RAN to determine a UE access sequence. The condition for allowing access to the cell on the movement path of the UE is used to determine a condition under which access to a cell measured by the UE is allowed. The frequency of the cell on the movement path of the UE, the SMTC of the cell on the movement path of the UE, and the SFN of the cell on the movement path of the UE may be used for cell search.

Step 202: The UE establishes a connection to the RAN 1.

Initial access of the UE is completed in the foregoing step 201 and step 202. In addition, in the foregoing process, the UE determines, based on the network access planning information, the RAN that needs to be accessed by the UE. This narrows a cell search and detection range, and facilitates fast and successful access of the UE. This solution simplifies and optimizes a network access management method for a terminal device in a vertical industry, to improve network access reliability and reduce access management complexity for a terminal device and a network.

Because the UE moves, a location of the UE changes, and therefore the RAN accessed by the UE needs to be changed. In this case, the following step 203 to step 210 are triggered to be performed.

Step 203: The RAN 1 determines the RAN 2 based on a current location of the UE and the network access planning information.

It should be noted that in this case, the current location of the UE is different from the current location of the UE when the UE performs initial access in the foregoing step 201, that is, the location of the UE has changed.

The network access planning information herein is the same as the network access planning information in the foregoing step 201, and the cell on the movement path of the UE includes a cell of the RAN 2 (for example, a first cell of the RAN 2). The RAN 1 determines, based on the current location of the UE, that the UE is to move out of a network area managed by the RAN 1 and is to enter a network area managed by the RAN 2 (for example, to enter the first cell of the RAN 2).

For example, the UE moves from a location A to a location B. The RAN 1 determines, based on the current location B of the UE and the network access planning information, that a network cell (for example, the first cell) to be entered by the UE belongs to the RAN 2. Therefore, the RAN 1 determines that the RAN 2 is a RAN to be accessed by the UE, that is, the UE is handed over to a cell of the RAN 2.

Step 204: The RAN 1 sends a handover request message to the RAN 2, and correspondingly the RAN 2 may receive the handover request message.

The handover request message includes a context of the UE and the network access planning information.

Step 205: The RAN 2 sends handover configuration information to the RAN 1, and correspondingly, the RAN 1 may receive the handover configuration information.

In a specific implementation method, the RAN 2 sends, to the RAN 1, a handover response message in response to the handover request message, where the handover response message includes the handover configuration information.

The handover configuration information is used to search for and select the cell of the RAN 2, and the handover configuration information includes an identifier of the cell that belongs to the RAN 2 and that is in the network access planning information.

When receiving the handover request message, the RAN 2 determines, based on the network access planning information in the handover request message, the identifiers of the cells that belong to the RAN 2 and that are in the network access planning information. A cell in these cells is a cell to be accessed by the UE. Therefore, the RAN 2 includes, in the handover configuration information, the identifiers of the cells that belong to the RAN 2 and that are in the network access planning information, and sends the handover configuration information to the RAN 1. The RAN 1 sends the handover configuration information to the UE.

It should be noted that, the identifiers of the cells that belong to the RAN 2 and that are in the network access planning information may be some or all cells of the RAN 2. For example, three cells belong to the RAN 2, but only two of the three cells belong to the network access planning information. Therefore, the identifiers of the cells, determined by the RAN 2, that belong to the RAN 2 and that are in the network access planning information, are identifiers of the two cells.

Step 206: The RAN 1 sends the handover configuration information to the UE, and correspondingly, the UE may receive the handover configuration information.

In a specific implementation method, the RAN 1 sends a radio resource control (Radio Resource Control, RRC) configuration request message to the UE, where the RRC configuration request message includes the handover configuration information.

Optionally, the handover configuration information further includes one or more of the following information: a frequency of the cell that belongs to the RAN 2 and that is in the network access planning information, a handover threshold of the cell that belongs to the RAN 2 and that is in the network access planning information, a priority of the UE that is allowed to access, and a random access preamble (preamble) sequence. For example, the cell that belongs to the RAN 2 and that is in the network access planning information includes the first cell, and the first cell herein refers to any cell that belongs to the RAN 2 and that is in the network access planning information. It may be understood as that the handover configuration information includes one or more of the following information: an identifier of the first cell, a frequency of the first cell, a handover threshold of the first cell, the priority of the UE that is allowed to access, and a random access preamble (preamble) sequence.

Step 207: The UE selects the first cell in the cells of the RAN 2.

For example, the UE selects, based on information such as the frequency of the cell that belongs to the RAN 2 and that is in the network access planning information and the handover threshold of the cell that belongs to the RAN 2 and that is in the network access planning information, an optimal cell that satisfies a condition, and the optimal cell may be the first cell.

It should be noted that a cell (for example, referred to as a second cell) selected by the UE is not limited to the cell (that is, the first cell) to be entered by the UE, but may be any cell in the cells that belong to the RAN 2 and that are in the network access planning information, provided that the cell is an optimal cell that satisfies the condition.

Step 208: The UE sends an RRC connection request message to the RAN 2.

The RRC connection request message includes the identifier of the first cell, and the RRC connection request message is used to request to access the first cell.

Step 209: The RAN 2 establishes an RRC connection to the UE.

Optionally, before step 209, the RAN 2 determines to allow the UE to access the cell of the RAN 2.

Step 210: The RAN 2 sends an RRC connection response message to the UE, and correspondingly, the UE may receive the RRC connection response message.

The RRC connection response message is used to notify that the handover is completed.

According to the foregoing step 203 to step 210, when the UE moves, the RAN 1 may select, for the UE based on the current location of the UE and the network access planning information, the RAN 2 to which the UE is to be handed over, and then, trigger the UE to select a cell (referred to as the first cell) from the cells that belong to the RAN 2 and that are in the network access planning information to access. In the foregoing process, the RAN 1 determines, based on the network access planning information, a RAN to which the UE needs to be handed over. This narrows a cell search and detection range, and facilitates fast and successful access of the UE. This solution simplifies and optimizes a network access management method for a terminal device in a vertical industry, to improve network access reliability and reduce access management complexity for a terminal device and a network.

In an implementation method, before step 201, an NVAF receives information about the movement path of the UE (where for example, the information about the movement path includes information about a geographical location on the movement path of the UE) from a control center. The NVAF determines the network access planning information of the UE based on network deployment information (where for example, the network deployment information includes cell coverage information of network deployment) and the information about the movement path of the UE. Then, the NVAF sends the network access planning information of the UE to a core network element. Then, the core network element may send the network access planning information to an access network device (for example, the RAN 1) and the UE. In this way, the UE and the RAN 1 can obtain and store the network access planning information of the UE. Further, the UE may subsequently select, by using the network access planning information, a RAN to be initially accessed, and the RAN 1 may select, for the UE based on the network access planning information, a RAN to be handed over. The core network element herein includes, for example, a user plane network element (for example, a UPF), a mobility management network element (for example, an AMF), and the like.

The following describes in detail the embodiment shown in FIG. 2 with reference to a specific example.

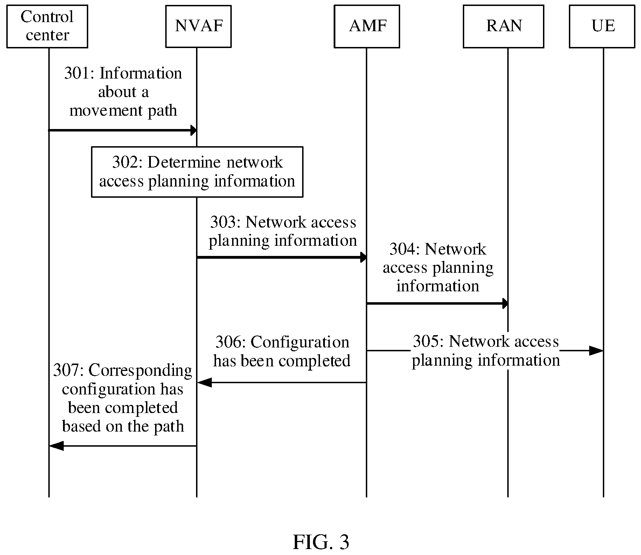

FIG. 3 is another schematic flowchart of a network access management method for UE according to this application.

This embodiment describes a process in which an NVAF determines network access planning information of UE, and sends the network access planning information.

The method includes the following steps.

Step 301: A control center (for example, a vertical industry center) provides information about a movement path of the UE to the NVAF, where the information about the movement path includes an identifier of the UE and the information about the movement path described by using coordinates.

Optionally, the information about the movement path of the UE further includes an expected time, an expected speed, whether service continuity is supported, and the like.

Step 302: The NVAF determines the network access planning information of the UE based on network deployment information (information such as coverage and a frequency of each cell in a network) and the information about the movement path of the UE.

The network access planning information includes parameters such as an identifier of a network cell that can be accessed and that corresponds to each movement path, a priority of the UE that is allowed to access, a condition (for example, signal strength) for allowing access to each cell, a frequency of the network cell, an SMTC, and an SFN.

Step 303: The NVAF provides the determined network access planning information of the UE to an AMF serving the UE.

For example, the NVAF sends a UE access configuration request (UE Access Configuration Request) to the AMF, where the UE access configuration request carries the identifier of the UE and the network access planning information of the UE.

Step 304: The AMF determines related RANs based on the network access planning information, and sends the network access planning information of the UE to the RANs.

The RANs herein may be all RANs corresponding to cells in the network access planning information, or may be some RANs corresponding to cells in the network access planning information (for example, may be RANs near a location at which the UE initiates an access request).

For example, the AMF sends the UE access configuration request (UE Access Configuration Request) to the RANs, where the UE access configuration request carries the identifier of the UE and the network access planning information of the UE.

Step 305: The AMF sends the network access planning information of the UE to the UE.

Step 306: The AMF confirms, to the NVAF, that network access planning of the UE has been configured.

For example, the AMF sends a UE access configuration response (UE Access Configuration Response) to the NVAF, where the UE access configuration response carries indication information indicating that configuration has been completed.

This step is an optional step.

Step 307: The NVAF confirms, to the control center, that corresponding configuration has been completed for network access of the UE based on the path.

This step is an optional step.

In the method in this embodiment, the network access planning information of the UE may be determined based on expected movement information of the UE, and provided to the UE and the RANs, so that an access network can subsequently provide network service guarantee to the network access of the UE. However, in a current technology, the network cannot determine the network access planning information of the UE based on the expected movement information of the UE, and cannot provide the network access planning information to the UE and the RANs.

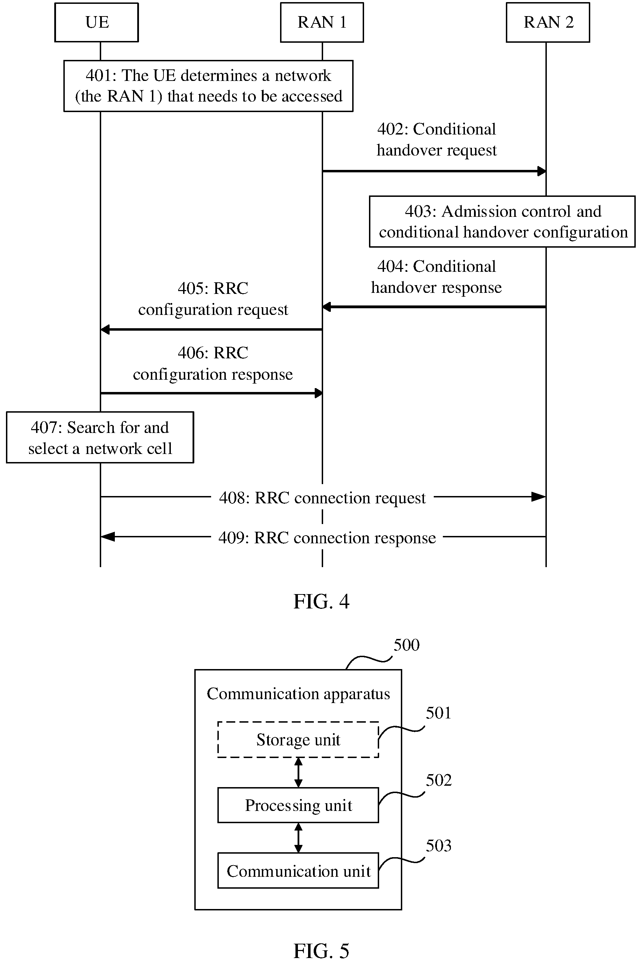

FIG. 4 is another schematic flowchart of a network access management method for UE according to this application. This embodiment describes network access management involved when UE moves. The method includes the following steps.

Step 401: The UE determines, based on a current location and network access planning information obtained from a network, a network (that is, a RAN 1) that needs to be accessed.

Optionally, to ensure preferential access of the UE, the UE may perform access based on a priority provided by the network.

Step 402: When the UE is in a connected state and needs to be handed over because the UE moves, the RAN 1 determines a next hop RAN 2 based on the network access planning information of the UE, and the RAN 1 sends a conditional handover request (Conditional Handover Request) to the RAN 2. The conditional handover request includes an identifier of the UE, the network access planning information of the UE, and a context (UE context) of the UE.

Step 403: The RAN 2 performs admission control and corresponding conditional handover (conditional handover) configuration on the UE based on the network access planning information of the UE, for example, configures parameters such as an identifier of a cell, a frequency of the cell, a priority, and a preamble, and a handover threshold of the cell that are for searching for and selecting a new network cell.

Step 404: The RAN 2 sends a conditional handover response (Conditional Handover Response) to the RAN 1, where the conditional handover response includes conditional handover configuration information.

Step 405 and step 406: The RAN 1 provides the conditional handover configuration information to the UE by using an RRC configuration (RRC configuration) (including an RRC configuration request and an RRC configuration response).

Step 407: The UE searches for and selects a network cell based on the conditional handover configuration information.

Step 408 and step 409: The UE selects to access the network cell in the conditional handover configuration information, establishes an RRC connection (including the RRC connection request and the RRC connection response) to the RAN 2 corresponding to the cell, and completes a RAN handover.

According to this embodiment, when the UE moves, RANs may perform advance processing on movement and handover of the UE, thereby ensuring reliability of a network connection and network service continuity of the UE. In addition, operations performed by the UE on network measurement and selection may also be simplified. However, a network in the current technology does not support processing on movement and handover of the UE based on the network access planning information of the UE.

According to the foregoing methods provided in this application, appropriate network access planning information is selected for the UE based on the movement path of the UE, a UE type, network deployment, information about a geographical area, and the like, so that the network access management method can be simplified and optimized. Therefore, network access reliability can be improved, access management complexity for the UE and the network can be reduced, to help avoid a potential problem that the UE frequently changes an accessed cell, and ensure network service continuity.

The foregoing mainly describes the solutions provided in this application from a perspective of interaction between network elements. It may be understood that to implement the foregoing functions, each network element includes a corresponding hardware structure and/or software module for implementing each function. A person of ordinary skill in the art should easily be aware that, in combination with units and algorithm steps of examples described in the embodiments disclosed in this specification, the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

FIG. 5 is a block diagram of a possible example of a communication apparatus in this application, and the communication apparatus 500 may exist in a form of software or hardware. The communication apparatus 500 may include a processing unit 502 and a communication unit 503. In an implementation, the communication unit 503 may include a receiving unit and a sending unit. The processing unit 502 is configured to control and manage an action of the communication apparatus 500. The communication unit 503 is configured to support the communication apparatus 500 in communicating with another network entity. The communication apparatus 500 may further include a storage unit 501, configured to store program code and data of the communication apparatus 500.

The processing unit 502 may be a processor or a controller, for example, may be a general-purpose central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. The processor may be a combination of processors implementing a computing function, for example, a combination including one or more microprocessors, or a combination of a DSP and a microprocessor. The storage unit 501 may be a memory. The communication unit 503 is an interface circuit of the apparatus, and is configured to receive a signal from another apparatus. For example, when the apparatus is implemented in a form of a chip, the communication unit 503 is an interface circuit used by the chip to receive a signal from another chip or apparatus, or is an interface circuit used by the chip to send a signal to another chip or apparatus.

The communication apparatus 500 may be the terminal device in any one of the foregoing embodiments, or may be a chip used for the terminal device. For example, when the communication apparatus 500 is the terminal device, the processing unit 502 may be, for example, a processor, and the communication unit 503 may be, for example, a transceiver. Optionally, the transceiver may include a radio frequency circuit, and the storage unit may be, for example, a memory. For example, when the communication apparatus 500 is the chip used for the terminal device, the processing unit 502 may be, for example, a processor, and the communication unit 503 may be, for example, an input/output interface, a pin, or a circuit. The processing unit 502 may execute computer-executable instructions stored in the storage unit. Optionally, the storage unit is a storage unit inside the chip, such as a register or a buffer. Alternatively, the storage unit may be a storage unit that is inside the terminal device and that is located outside the chip, such as a read-only memory (read-only memory, ROM), another type of static storage device that can store static information and instructions, or a random access memory (random access memory, RAM).

In an embodiment, the communication apparatus 500 is the terminal device, and the communication unit 503 of the terminal device includes a sending unit and a receiving unit. The processing unit is configured to: determine a first access network device based on network access planning information and a current location of the terminal device, where the network access planning information includes an identifier of a cell on a movement path of the terminal device, the cell on the movement path of the terminal device includes a cell of the first access network device, and a cell covering the current location of the terminal device belongs to the first access network device; and establish a connection to the first access network device.

In a possible implementation method, the network access planning information further includes one or more of the following information: a priority of the terminal device that is allowed to access, a condition for allowing access to the cell on the movement path of the terminal device, a frequency of the cell on the movement path of the terminal device, a radio resource management-based synchronization signal block measurement timing configuration SMTC of the cell on the movement path of the terminal device, and a system frame number SFN of the cell on the movement path of the terminal device.

In a possible implementation method, the receiving unit is configured to receive handover configuration information from the first access network device, where the handover configuration information is used to search for and select a cell of a second access network device, and the handover configuration information includes an identifier of the cell that belongs to the second access network device and that is in the network access planning information. The processing unit 502 is configured to select a first cell in the cells of the second access network device. The sending unit is configured to send a radio resource control RRC connection request message to the second access network device, where the RRC connection request message includes an identifier of the first cell, and the RRC connection request message is used to request to access the first cell. The receiving unit is further configured to receive an RRC connection response message from the second access network device.

In a possible implementation method, the handover configuration information further includes one or more of the following information: the identifier of the first cell, a frequency of the first cell, a handover threshold of the first cell, a priority of the terminal device that is allowed to access, and a random access preamble (preamble) sequence.

In a possible implementation method, the receiving unit is specifically configured to receive an RRC configuration request message from the first access network device, where the RRC configuration request message includes the handover configuration information.

It may be understood that for a specific implementation process and corresponding beneficial effects of the communication apparatus used in the network access management method for a terminal device, refer to related descriptions in the foregoing method embodiments. Details are not described herein again.

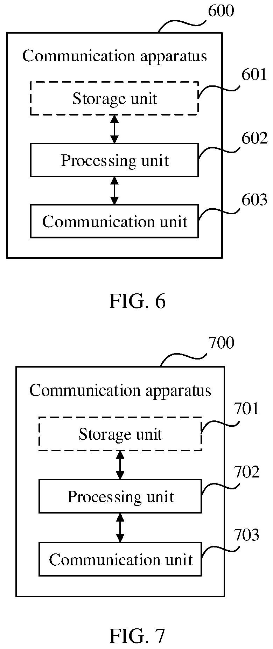

FIG. 6 is a block diagram of a possible example of a communication apparatus in this application, and the communication apparatus 600 may exist in a form of software or hardware. The communication apparatus 600 may include a processing unit 602 and a communication unit 603. In an implementation, the communication unit 603 may include a receiving unit and a sending unit. The processing unit 602 is configured to control and manage an action of the communication apparatus 600. The communication unit 603 is configured to support the communication apparatus 600 in communicating with another network entity. The communication apparatus 600 may further include a storage unit 601, configured to store program code and data of the communication apparatus 600.

The processing unit 602 may be a processor or a controller, for example, may be a CPU, a general-purpose processor, a DSP, an ASIC, an FPGA or another programmable logic device, a transistor logic device, a hardware component, or any combination thereof. The processor may implement or execute various example logical blocks, modules, and circuits described with reference to content disclosed in this application. The processor may be a combination of processors implementing a computing function, for example, a combination including one or more microprocessors, or a combination of a DSP and a microprocessor. The storage unit 601 may be a memory. The communication unit 603 is an interface circuit of the apparatus, and is configured to receive a signal from another apparatus. For example, when the apparatus is implemented in a form of a chip, the communication unit 603 is an interface circuit used by the chip to receive a signal from another chip or apparatus, or is an interface circuit used by the chip to send a signal to another chip or apparatus.

The communication apparatus 600 may be the access network device in any one of the foregoing embodiments, or may be a chip used for the access network device. For example, when the communication apparatus 600 is the access network device, the processing unit 602 may be, for example, a processor, and the communication unit 603 may be, for example, a transceiver. Optionally, the transceiver may include a radio frequency circuit, and the storage unit may be, for example, a memory. For example, when the communication apparatus 600 is the chip used for the access network device, the processing unit 602 may be, for example, a processor, and the communication unit 603 may be, for example, an input/output interface, a pin, or a circuit. The processing unit 602 may execute computer-executable instructions stored in the storage unit. Optionally, the storage unit is a storage unit, such as a register or a cache, in the chip. Alternatively, the storage unit may be a storage unit that is in the access network device and that is located outside the chip, for example, a ROM or another type of static storage device that can store static information and instructions, or a RAM.

In an embodiment, the communication apparatus 600 is the first access network device in the foregoing examples, and the communication unit 603 of the first access network device includes a sending unit and a receiving unit.

The processing unit 602 is configured to determine a second access network device based on a current location of a terminal device and network access planning information, where the network access planning information includes an identifier of a cell on a movement path of the terminal device, the cell on the movement path of the terminal device includes a first cell of the second access network device, and the terminal device is to enter the first cell.

The sending unit is configured to send a handover request message to the second access network device, where the handover request message includes a context of the terminal device and the network access planning information.

The receiving unit is configured to receive handover configuration information from the second access network device, where the handover configuration information is used to search for and select a cell of the second access network device, and the handover configuration information includes an identifier of the cell that belongs to the second access network device and that is in the network access planning information.

The sending unit is further configured to send the handover configuration information to the terminal device.

In a possible implementation method, the network access planning information further includes one or more of the following information: a priority of the terminal device that is allowed to access, a condition for allowing access to the cell on the movement path of the terminal device, a frequency of the cell on the movement path of the terminal device, an SMTC of the cell on the movement path of the terminal device, and an SFN of the cell on the movement path of the terminal device.

In a possible implementation method, the handover configuration information further includes one or more of the following information: a frequency of the cell that belongs to the second access network device and that is in the network access planning information, a handover threshold of the cell that belongs to the second access network device and that is in the network access planning information, the priority of the terminal device that is allowed to access, and a random access preamble (preamble) sequence.

In a possible implementation method, the receiving unit is specifically configured to receive, by the first access network device from the second access network device, a handover response message in response to the handover request message, where the handover response message includes the handover configuration information.

In a possible implementation method, the sending unit is configured to send a radio resource control RRC configuration request message to the terminal device, where the RRC configuration request message includes the handover configuration information.

In a possible implementation method, the receiving unit is further configured to receive the network access planning information from a core network.

In a possible implementation method, the network access planning information is determined based on network deployment information and information about the movement path of the terminal device, and the network deployment information includes cell coverage information of network deployment.

In still another embodiment, the communication apparatus 600 is the second access network device in the foregoing examples, and the communication unit 603 of the second access network device includes a sending unit and a receiving unit.

The receiving unit is configured to receive a handover request message from a first access network device, where the handover request message includes a context of a terminal device and network access planning information, and the network access planning information includes an identifier of a cell on a movement path of the terminal device.

The sending unit is configured to send handover configuration information to the first access network device, where the handover configuration information is used by the terminal device to search for and select a cell of the second access network device, and the handover configuration information includes an identifier of the cell that belongs to the second access network device and that is in the network access planning information.

In a possible implementation method, the network access planning information further includes one or more of the following information: a priority of the terminal device that is allowed to access, a condition for allowing access to the cell on the movement path of the terminal device, a frequency of the cell on the movement path of the terminal device, an SMTC of the cell on the movement path of the terminal device, and an SFN of the cell on the movement path of the terminal device.

In a possible implementation method, the handover configuration information further includes one or more of the following information: a frequency of the cell that belongs to the second access network device and that is in the network access planning information, a handover threshold of the cell that belongs to the second access network device and that is in the network access planning information, the priority of the terminal device that is allowed to access, and a random access preamble (preamble) sequence.

In a possible implementation method, the sending unit is further configured to send, to the first access network device, a handover response message in response to the handover request message, where the handover response message includes the handover configuration information.

In a possible implementation method, the network access planning information is determined based on network deployment information and information about the movement path of the terminal device, and the network deployment information includes cell coverage information of network deployment.

In a possible implementation method, the processing unit is configured to determine a cell that is of the second access network device and that the terminal device is allowed to access.

In a possible implementation method, the receiving unit is further configured to receive a radio resource control RRC connection request message from the terminal device, where the RRC connection request message is used to request to access the cell of the second access network device. The processing unit 602 is configured to establish an RRC connection to the terminal device. The sending unit is configured to send an RRC connection response message to the terminal device.

It may be understood that for a specific implementation process and corresponding beneficial effects of the communication apparatus used in the network access management method for a terminal device, refer to related descriptions in the foregoing method embodiments. Details are not described herein again.

FIG. 7 is a block diagram of a possible example of a communication apparatus in this application, and the communication apparatus 700 may exist in a form of software or hardware. The communication apparatus 700 may include a processing unit 702 and a communication unit 703. In an implementation, the communication unit 703 may include a receiving unit and a sending unit. The processing unit 702 is configured to control and manage an action of the communication apparatus 700. The communication unit 703 is configured to support the communication apparatus 700 in communicating with another network entity. The communication apparatus 700 may further include a storage unit 701, configured to store program code and data of the communication apparatus 700.

The processing unit 702 may be a processor or a controller, for example, a CPU, a general-purpose processor, a DSP, an ASIC, an FPGA or another programmable logic device, a transistor logic device, a hardware component, or any combination thereof. The processor may implement or execute various example logical blocks, modules, and circuits described with reference to content disclosed in this application. The processor may be a combination of processors implementing a computing function, for example, a combination including one or more microprocessors, or a combination of a DSP and a microprocessor. The storage unit 701 may be a memory. The communication unit 703 is an interface circuit of the apparatus, and is configured to receive a signal from another apparatus. For example, when the apparatus is implemented in a form of a chip, the communication unit 703 is an interface circuit used by the chip to receive a signal from another chip or apparatus, or is an interface circuit used by the chip to send a signal to another chip or apparatus.

The communication apparatus 700 may be the network vision and awareness network element in any one of the foregoing embodiments, or may be a chip used for the network vision and awareness network element. For example, when the communication apparatus 700 is the network vision and awareness network element, the processing unit 702 may be, for example, a processor, and the communication unit 703 may be, for example, a transceiver. Optionally, the transceiver may include a radio frequency circuit, and the storage unit may be, for example, a memory. For example, when the communication apparatus 700 is the chip used for the network vision and awareness network element, the processing unit 702 may be, for example, a processor, and the communication unit 703 may be, for example, an input/output interface, a pin, or a circuit. The processing unit 702 may execute computer-executable instructions stored in the storage unit. Optionally, the storage unit is a storage unit, such as a register or a cache, in the chip. Alternatively, the storage unit may be a storage unit that is in the network vision and awareness network element and that is located outside the chip, for example, a ROM or another type of static storage device that can store static information and instructions, or a RAM.

In an embodiment, the communication apparatus 700 is the network vision and awareness network element, and the communication unit 703 of the network vision and awareness network element includes a sending unit and a receiving unit.

The receiving unit is configured to receive information about a movement path of a terminal device from a control center.

The processing unit is configured to determine network access planning information of the terminal device based on network deployment information and the information about the movement path of the terminal device, where the network access planning information includes an identifier of a cell on a movement path of the terminal device.

In a possible implementation method, the network deployment information includes cell coverage information of network deployment.

In a possible implementation method, the information about the movement path includes information about a geographical location on the movement path of the terminal device.

In a possible implementation method, the sending unit is configured to send the network access planning information of the terminal device to a core network element.

In a possible implementation method, the core network element includes a user plane network element and a mobility management network element.

It may be understood that for a specific implementation process and corresponding beneficial effects of the communication apparatus used in the network access management method for a terminal device, refer to related descriptions in the foregoing method embodiments. Details are not described herein again.

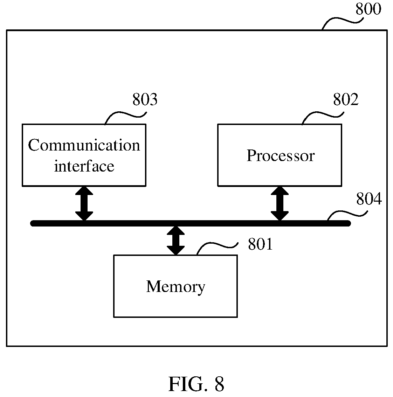

FIG. 8 is a schematic diagram of a communication apparatus according to this application. The communication apparatus may be the terminal device, the access network device, or the network vision and awareness network element in the foregoing embodiments. The communication apparatus 800 includes a processor 802, a communication interface 803, and a memory 801. Optionally, the communication apparatus 800 may further include a communication line 804. The communication interface 803, the processor 802, and the memory 801 may be connected to each other through the communication line 804. The communication line 804 may be a peripheral component interconnect (peripheral component interconnect, PCI for short) bus, an extended industry standard architecture (extended industry standard architecture, EISA for short) bus, or the like. The communication line 804 may be classified into an address bus, a data bus, a control bus, and the like. For ease of representation, only one thick line is used to represent the bus in FIG. 8, but this does not mean that there is only one bus or only one type of bus.

The processor 802 may be a CPU, a microprocessor, an ASIC, or one or more integrated circuits configured to control program execution in the solutions of this application.

The communication interface 803 is configured to communicate with another device or a communication network such as an Ethernet, a radio access network (radio access network, RAN), a wireless local area network (wireless local area network, WLAN), or a wired access network by using any apparatus such as a transceiver.

The memory 801 may be a ROM, another type of static storage device that can store static information and instructions, a RAM, or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory 801 is not limited thereto. The memory may exist independently and is connected to the processor through the communication line 804. The memory may alternatively be integrated with the processor.

The memory 801 is configured to store computer-executable instructions for executing the solutions of this application, and the processor 802 controls the execution. The processor 802 is configured to execute the computer-executable instructions stored in the memory 801, to implement the network access management method for a terminal device provided in the foregoing embodiments of this application.

Optionally, the computer-executable instructions in this embodiment of this application may also be referred to as application program code. This is not specifically limited in this embodiment of this application.

A person of ordinary skill in the art may understand that first, second, and various reference numerals in this application are merely distinguished for convenient description, and are not used to limit a scope of the embodiments of this application, and also indicate a sequence. The term "and/or" describes an association relationship for describing associated objects and indicates that three relationships may exist. For example, A and/or B may indicate the following three cases: Only A exists, both A and B exist, and only B exists. The character "/" generally indicates an "or" relationship between the associated objects. The term "at least one" means one or more. At least two means two or more. "At least one", "any one", or a similar expression thereof means any combination of the items, including a singular item (piece) or any combination of plural items (pieces). For example, at least one (piece, or type) of a, b, or c may indicate: a, b, c, a and b, a and c, b and c, or a, b, and c, where a, b, and c may be singular or plural. The term "a plurality of" indicates two or more, and another quantifier is similar to this. In addition, an element (element) that appears in singular forms "a", "an", and "the" does not mean "one or only one" unless otherwise specified in the context, but means "one or more". For example, "a device" means one or more such devices.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or the functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The various illustrative logical units and circuits described in the embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in the embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor, so that the processor may read information from the storage medium and write information to the storage medium. Optionally, the storage medium may further be integrated into the processor. The processor and the storage medium may be disposed in an ASIC.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

## Claims

1. A network access management method for a terminal device, comprising:
determining (203), by a first access network device, a second access network device based on a current location of the terminal device and network access planning information, wherein the network access planning information comprises identifiers of cells on a movement path of the terminal device, the cells on the movement path of the terminal device comprise a first cell of the second access network device, the terminal device is connected to the first access network device, and the terminal device is about to enter the first cell;
sending (204), by the first access network device, a handover request message to the second access network device, wherein the handover request message comprises a context of the terminal device and the network access planning information;
receiving (205), by the first access network device, handover configuration information from the second access network device, wherein the handover configuration information is used, by the terminal device, to search for and select (207) a cell of the second access network device, and the handover configuration information comprises an identifier of the cell that belongs to the second access network device and that is in the network access planning information; and
sending (206), by the first access network device, the handover configuration information to the terminal device.

2. The method according to claim 1, wherein the network access planning information further comprises one or more of the following information:
a frequency of the cell on the movement path of the terminal device, a radio resource management-based synchronization signal block measurement timing configuration, SMTC, of the cell on the movement path of the terminal device, and a session management function, SFN, of the cell on the movement path of the terminal device.

3. The method according to claim 1 or 2, wherein the handover configuration information further comprises one or more of the following information:
a frequency of the cell that belongs to the second access network device and that is in the network access planning information, a handover threshold of the cell that belongs to the second access network device and that is in the network access planning information, a priority of the terminal device that is allowed to access, and a random access preamble (preamble) sequence.

4. The method according to any one of claims 1 to 3, wherein the receiving (205), by the first access network device, handover configuration information from the second access network device comprises:
receiving, by the first access network device from the second access network device, a handover response message in response to the handover request message, wherein the handover response message comprises the handover configuration information.

5. A network access management apparatus (600) of a first access device for a terminal device, comprising a processing unit (602), a sending unit (603), and a receiving unit (603), wherein
the processing unit (602) is configured to determine a second access network device based on a current location of the terminal device and network access planning information, wherein the network access planning information comprises identifiers of cells on a movement path of the terminal device, the cells on the movement path of the terminal device comprise a first cell of the second access network device, the terminal device is connected to the first access network device, and the terminal device is about to enter the first cell;
the sending unit (603) is configured to send a handover request message to the second access network device, wherein the handover request message comprises a context of the terminal device and the network access planning information;
the receiving unit (603) is configured to receive handover configuration information from the second access network device, the handover configuration information for use, by the terminal device, to search for and select a cell of the second access network device, and the handover configuration information comprises an identifier of the cell that belongs to the second access network device and that is in the network access planning information; and
the sending unit (603) is further configured to send the handover configuration information to the terminal device.

6. The apparatus according to claim 5, wherein the network access planning information further comprises one or more of the following information:
a frequency of the cell on the movement path of the terminal device, a radio resource management-based synchronization signal block measurement timing configuration, SMTC, of the cell on the movement path of the terminal device, and a session management function, SFN, of the cell on the movement path of the terminal device.

## Patentansprüche

1. Netzwerkzugangsverwaltungsverfahren für ein Endgerät, umfassend:
Bestimmen (203), durch eine erste Zugangsnetzwerkeinrichtung, einer zweiten Zugangsnetzwerkeinrichtung basierend auf einem aktuellen Standort des Endgeräts und Netzwerkzugangsplanungsinformationen, wobei die Netzwerkzugangsplanungsinformationen Kennungen von Zellen auf einem Bewegungspfad des Endgeräts umfassen, die Zellen auf dem Bewegungspfad des Endgeräts eine erste Zelle der zweiten Zugangsnetzwerkeinrichtung umfassen, das Endgerät mit der ersten Zugangsnetzwerkeinrichtung verbunden ist und das Endgerät im Begriff ist, die erste Zelle zu betreten;
Senden (204), durch die erste Zugangsnetzwerkeinrichtung, einer Übergabeanforderungsnachricht an die zweite Zugangsnetzwerkeinrichtung, wobei die Übergabeanforderungsnachricht einen Kontext des Endgeräts und die Netzwerkzugangsplanungsinformationen umfasst;
Empfangen (205), durch die erste Zugangsnetzwerkeinrichtung, von Übergabekonfigurationsinformationen von der zweiten Zugangsnetzwerkeinrichtung, wobei die Übergabekonfigurationsinformationen durch das Endgerät verwendet werden, um nach einer Zelle der zweiten Zugangsnetzwerkeinrichtung zu suchen und diese auszuwählen (207), und die Übergabekonfigurationsinformationen eine Kennung der Zelle umfassen, die zu der zweiten Zugangsnetzwerkeinrichtung gehört und die sich in den Netzwerkzugangsplanungsinformationen befindet; und
Senden (206), durch die erste Zugangsnetzwerkeinrichtung, der Übergabekonfigurationsinformationen an das Endgerät.

2. Verfahren nach Anspruch 1, wobei die Netzwerkzugangsplanungsinformationen ferner eine oder mehrere der folgenden Informationen umfassen:
eine Frequenz der Zelle auf dem Bewegungspfad des Endgeräts, eine auf Funkressourcenverwaltung basierende Synchronisierungssignalblock-Zeitsteuerungskonfiguration, SMTC, der Zelle auf dem Bewegungspfad des Endgeräts und eine Sitzungsverwaltungsfunktion, SFN, der Zelle auf dem Bewegungspfad des Endgeräts.

3. Verfahren nach Anspruch 1 oder 2, wobei die Übergabekonfigurationsinformationen ferner eine oder mehrere der folgenden Informationen umfassen:
eine Frequenz der Zelle, die zu der zweiten Zugangsnetzwerkeinrichtung gehört und die sich in den Netzwerkzugangsplanungsinformationen befindet, einen Übergabeschwellenwert der Zelle, die zu der zweiten Zugangsnetzwerkeinrichtung gehört und die sich in den Netzwerkzugangsplanungsinformationen befindet, eine Priorität des Endgeräts, dem der Zugang gestattet ist, und eine Direktzugangspräambelsequenz (Präambelsequenz).

4. Verfahren nach einem der Ansprüche 1 bis 3, wobei das Empfangen (205), durch die erste Zugangsnetzwerkeinrichtung, von Übergabekonfigurationsinformationen von der zweiten Zugangsnetzwerkeinrichtung Folgendes umfasst:
Empfangen, durch die erste Zugangsnetzwerkeinrichtung von der zweiten Zugangsnetzwerkeinrichtung, einer Übergabeantwortnachricht als Reaktion auf die Übergabeanforderungsnachricht, wobei die Übergabeantwortnachricht die Übergabekonfigurationsinformationen umfasst.

5. Netzwerkzugangsverwaltungsvorrichtung (600) einer ersten Zugangseinrichtung
für ein Endgerät, umfassend eine Verarbeitungseinheit (602), eine
Sendeeinheit (603) und eine Empfangseinheit (603), wobei die Verarbeitungseinheit (602) dazu konfiguriert ist, basierend auf einem aktuellen Standort des Endgeräts und Netzwerkzugangsplanungsinformationen eine zweite Zugangsnetzwerkeinrichtung zu bestimmen, wobei die Netzwerkzugangsplanungsinformationen Kennungen von Zellen auf einem Bewegungspfad des Endgeräts umfassen, die Zellen auf dem Bewegungspfad des Endgeräts eine erste Zelle der zweiten Zugangsnetzwerkeinrichtung umfassen, das Endgerät mit der ersten Zugangsnetzwerkeinrichtung verbunden ist und das Endgerät im Begriff ist, die erste Zelle zu betreten;
die Sendeeinheit (603) dazu konfiguriert ist, eine Übergabeanforderungsnachricht an die zweite Zugangsnetzwerkeinrichtung zu senden, wobei die Übergabeanforderungsnachricht einen Kontext des Endgeräts und die Netzwerkzugangsplanungsinformationen umfasst;
die Empfangseinheit (603) dazu konfiguriert ist, Übergabekonfigurationsinformationen von der zweiten Zugangsnetzwerkeinrichtung zu empfangen, wobei die Übergabekonfigurationsinformationen der Verwendung durch das Endgerät dienen, um nach einer Zelle der zweiten Zugangsnetzwerkeinrichtung zu suchen und diese auszuwählen, und die Übergabekonfigurationsinformationen eine Kennung der Zelle umfassen, die zu der zweiten Zugangsnetzwerkeinrichtung gehört und die sich in den Netzwerkzugangsplanungsinformationen befindet; und
die Sendeeinheit (603) ferner dazu konfiguriert ist, die Übergabekonfigurationsinformationen an das Endgerät zu senden.

6. Vorrichtung nach Anspruch 5, wobei die Netzwerkzugangsplanungsinformationen ferner eine oder mehrere der folgenden Informationen umfassen:
eine Frequenz der Zelle auf dem Bewegungspfad des Endgeräts, eine auf Funkressourcenverwaltung basierende Synchronisierungssignalblock-Zeitsteuerungskonfiguration,
SMTC, der Zelle auf dem Bewegungspfad des Endgeräts und eine Sitzungsverwaltungsfunktion, SFN, der Zelle auf dem Bewegungspfad des Endgeräts.

## Revendications

1. Procédé de gestion d'accès au réseau pour un dispositif terminal, comprenant :
la détermination (203), par un premier dispositif de réseau d'accès, d'un second dispositif de réseau d'accès sur la base d'un emplacement actuel du dispositif terminal et d'informations de planification d'accès au réseau, dans lequel les informations de planification d'accès au réseau comprennent des identifiants de cellules sur un trajet de déplacement du dispositif terminal, les cellules sur le trajet de déplacement du dispositif terminal comprennent une première cellule du second dispositif de réseau d'accès, le dispositif terminal est connecté au premier dispositif de réseau d'accès, et le dispositif terminal est sur le point d'entrer dans la première cellule ;
l'envoi (204), par le premier dispositif de réseau d'accès, d'un message de demande de transfert au second dispositif de réseau d'accès, dans lequel le message de demande de transfert comprend un contexte du dispositif terminal et les informations de planification d'accès au réseau ;
la réception (205), par le premier dispositif de réseau d'accès, d'informations de configuration de transfert provenant du second dispositif de réseau d'accès, dans lequel les informations de configuration de transfert sont utilisées, par le dispositif terminal, pour rechercher et sélectionner (207) une cellule du second dispositif de réseau d'accès, et les informations de configuration de transfert comprennent un identifiant de la cellule qui appartient au second dispositif de réseau d'accès et qui se trouve dans les informations de planification d'accès au réseau ; et
l'envoi (206), par le premier dispositif de réseau d'accès, des informations de configuration de transfert au dispositif terminal.

2. Procédé selon la revendication 1, dans lequel les informations de planification d'accès au réseau comprennent également une ou plusieurs des informations suivantes :
une fréquence de la cellule sur le trajet de déplacement du dispositif terminal, une configuration de temporisation de mesure de bloc de signal de synchronisation, SMTC, basée sur la gestion des ressources radio, de la cellule sur le trajet de déplacement du dispositif terminal, et une fonction de gestion de session, SFN, de la cellule sur le trajet de déplacement du dispositif terminal.

3. Procédé selon la revendication 1 ou 2, dans lequel les informations de configuration du transfert comprennent également une ou plusieurs des informations suivantes :
une fréquence de la cellule qui appartient au second dispositif de réseau d'accès et qui se trouve dans les informations de planification d'accès au réseau, un seuil de transfert de la cellule qui appartient au second dispositif de réseau d'accès et qui se trouve dans les informations de planification d'accès au réseau, une priorité du dispositif terminal qui est autorisé à accéder, et une séquence de préambule d'accès aléatoire (préambule) .

4. Procédé selon l'une quelconque des revendications 1 à 3, dans lequel la réception (205), par le premier dispositif de réseau d'accès, d'informations de configuration de transfert provenant du second dispositif de réseau d'accès comprend :
la réception, par le premier dispositif de réseau d'accès à partir du second dispositif de réseau d'accès, d'un message de réponse de transfert en réponse au message de demande de transfert, dans lequel le message de réponse de transfert comprend les informations de configuration de transfert.

5. Appareil de gestion d'accès au réseau (600) d'un premier dispositif d'accès
pour un dispositif terminal, comprenant une unité de traitement (602), une
unité d'envoi (603) et une unité de réception (603), dans lequel l'unité de traitement (602) est configurée pour déterminer un second dispositif de réseau d'accès sur la base d'un emplacement actuel du dispositif terminal et d'informations de planification d'accès au réseau, dans lequel les informations de planification d'accès au réseau comprennent des identifiants de cellules sur un trajet de déplacement du dispositif terminal, les cellules sur le trajet de déplacement du dispositif terminal comprennent une première cellule du second dispositif de réseau d'accès, le dispositif terminal est connecté au premier dispositif de réseau d'accès, et le dispositif terminal est sur le point d'entrer dans la première cellule ;
l'unité d'envoi (603) est configurée pour envoyer un message de demande de transfert au second dispositif de réseau d'accès, dans lequel le message de demande de transfert comprend un contexte du dispositif terminal et les informations de planification d'accès au réseau ;
l'unité de réception (603) est configurée pour recevoir des informations de configuration de transfert à partir du second dispositif de réseau d'accès, les informations de configuration de transfert sont utilisées, par le dispositif terminal, pour rechercher et sélectionner une cellule du second dispositif de réseau d'accès, et les informations de configuration de transfert comprennent un identifiant de la cellule qui appartient au second dispositif de réseau d'accès et qui se trouve dans les informations de planification d'accès au réseau ; et
l'unité d'envoi (603) est également configurée pour envoyer les informations de configuration de transfert au dispositif terminal.

6. Appareil selon la revendication 5, dans lequel les informations de planification d'accès au réseau comprennent également une ou plusieurs des informations suivantes :
une fréquence de la cellule sur le trajet de déplacement du dispositif terminal, une configuration de temporisation de mesure de bloc de signal de synchronisation, SMTC, basée sur la gestion des ressources radio, de la cellule sur le trajet de déplacement du dispositif terminal, et une fonction de gestion de session, SFN, de la cellule sur le trajet de déplacement du dispositif terminal.
